# EUROPÄISCHE PATENTSCHRIFT

(11) **EP 0 382 202 B1**
(45) Veröffentlichungstag und Bekanntmachung des Hinweises auf die Patenterteilung: **06.04.1994**
(21) Anmeldenummer: 90102443.0
(22) Anmeldetag: 07.02.1990
(51) Int. Cl.: B01D 29/05, B01D 29/54, B01D 29/68, B01D 53/22, B01D 61/14, B01D 65/02

(54) **Verfahren und Vorrichtung zum Entfernen abzuscheidender Bestandteile aus einem Fluid**
Method and device for the removal of components to be separated from a fluid
Procédé et dispositif pour enlever le composant à séparer d'un fluide

(30) Priorität: 09.02.1989 DE 3903813
(43) Veröffentlichungstag der Anmeldung: 16.08.1990
(73) Patentinhaber: BOKELA Ingenieurgesellschaft für Mechanische Verfahrenstechnik mbH, D-76131 Karlsruhe (DE)
(72) Erfinder: Bott, Reinhard, Dr.-Ing., D-7500 Karlsruhe 1 (DE); Kern, Robert, Dr.-Ing., D-7504 Weingarten (DE); Langeloh, Thomas, Dr.-Ing., D-6913 Mühlhausen (DE)
(74) Vertreter: Weber, Otto Ernst, Dipl.-Phys.

(56) Entgegenhaltungen:
- EP-A- 0 281 328
- EP-A- 0 322 649
- DE-A- 2 737 135
- DE-U- 8 523 756
- GB-A- 495 112
- US-A- 3 640 395
- US-A- 3 784 016
- US-A- 4 253 962

## Beschreibung

Die Erfindung betrifft ein Verfahren zum Entfernen abzuscheidender Bestandteile aus einem Fluid nach dem Oberbegriff des Anspruchs 1 sowie eine Filtrationsvorrichtung nach dem Oberbegriff des Patentanspruchs 7.

Die Erfindung geht dabei aus von einem Verfahren zum Entfernen abzuscheidender Bestandteile aus einem Fluid bzw. von einer Filtrationsvorrichtung, wie sie aus der DE-OS 27 37 135 bekannt ist.

Diese bekannte Vorrichtung betrifft die Reinigung von Flüssigkeiten und zwar Filter zur Abscheidung von Schwebeteilchen aus Flüssigkeiten. Bei diesem Filter der bekannten Vorrichtung handelt es sich um ein Siebfilterelement.

Ein Siebfilter ist eine Vorrichtung zum Trennen einer Partikelfraktion nach der Korngröße. Übliche Siebfilter besitzen eine Trennkorngröße, die im Bereich von 10 Mikrometern und höher liegt. Bei Suspensionen, Emulsionen, Gasgemischen oder Aerosolen ist eine derartige Filtereinrichtung nicht einsetzbar, da die bei der angestrebten Trennung abzuscheidenen Partikel von einem Sieb nicht zurückgehalten werden.

Es ist daher die **Aufgabe** der Erfindung, ein Verfahren der gattungsgemäßen Art zu schaffen, das eine Filtration mit einem mittleren konstanten Durchsatz auf der gesamten Filteroberfläche durch den Filter auch bei der Trennung von Suspensionen, Emulsionen, Gasgemischen oder Aerosolen gestattet, wobei die abzuscheidenen Partikel eine geringere Größe aufweisen, als die von einem Sieb zurückgehaltenen Partikel.

Weiterhin ist es Aufgabe der vorliegenden Erfindung, eine Vorrichtung der gattungsgemäßen Art so auszubilden, daß sie diese gewünschte Abscheidung auch bei langer Betriebsdauer gewährleistet ist.

Gelöst wird die das Verfahren betreffende Aufgabe gemäß der Erfindung dadurch, daß das Fluid derart durch das als Membranfilter ausgebildete Filtermedium geleitet wird, daß ein Querstrom entlang der Oberfläche der Membran im wesentlichen vermieden wird. Der die Vorrichtung betreffende Teil der Aufgabe wird gemäß Anspruch 7 dadurch gelöst, daß das Filtermedium als Membranfilter ausgebildet ist.

Zwar sind Membranfilterverfahren und Membranfilterapparate grundsätzlich bekannt, doch wird der Suspensionsstrom bei einem Membranfilter immer parallel zur Oberfläche der Membran gerichtet zugeführt, wie auch aus der US-PS 4,253,962 hervorgeht. Auf diese Weise sollen die an der Membranoberfläche abgelagerten Partikel abgespült und weitertransportiert werden, während die Flüssigkeit die Membran rechtwinklig zum Suspensionsstrom durchdringt. Um bei dieser Vorgehensweise ein allmähliches Zusetzen der Membran mit abfiltrierten Partikeln zu vermeiden, ist es notwendig, zyklusweise eine Rückspülung durchzuführen, bei der die abfiltrierten Partikel von der Membranoberfläche wieder in die Suspension zurückgespült weden, wodurch aber lediglich der Feststoffanteil in der Suspension vor dem Membranfilter prozentual ansteigt.

Die dem Fachmann auf dem Gebiet der Filtration und insbesondere auf dem Gebiet der Membranfiltration bislang geläufige Lehre, ein Membranfilter immer parallel zur Oberfläche der Membran, also tangential, anzuströmen, wird beim Verfahren und bei der Vorrichtung gemäß der vorliegenden Patentanmeldung absichtlich außer Acht gelassen - es wird sogar gezielt entgegen dieser Lehre gehandelt, indem das Membranfilter nicht parallel zur Strömungsrichtung, sondern rechtwinklig zur Strömungsrichtung der Suspension angeordnet wird und damit auch unmittelbar rechtwinklig von der Suspension durchströmt wird. Die in der Suspension bzw. im Fluid enthaltenen Verunreinigungen werden damit bewußt an der Membran abgelagert und nicht - wie im Stand der Technik entlang ihrer Oberfläche weitertransportiert.

Wenn die abfiltrierten Bestandteile in den Rückspülraum durch eine dem Membranfiltermedium zugewandte Einspülöffnung gespült werden, die kleiner als die Fläche des Membranfiltermediums ist, und wenn der Filtrationsvorgang und Rückspülvorgang gleichzeitig durchgeführt werden, kann der Filtrationsvorgang kontinuierlich ohne Unterbrechung durch den Rückspülvorgang weitergeführt werden. Rückgespült wird nur in dem Teilbereich der Membranoberfläche, der gerade von der Einspülöffnung überstrichen wird. Hierfür wird diese in vorteilhafter Weise zyklisch über die gesamte Oberfläche des Membranfilters bewegt. Dabei ist darauf zu achten, daß der Rückspülvorgang in Relation zum Filtrationsvorgang nicht zu lang oder zu häufig durchgeführt wird, weil sonst die Konzentration der abgesaugten Partikel durch rückgespültes Filtrat zu stark verringert wird. Der Rückspülvorgang darf hingegen auch nicht zu kurz oder zu selten durchgeführt werden, weil dann der Membranfilter verstopft und der Durchsatz durch den Membranfilter verringert wird.

In einer Weiterbildung der Erfindung werden die an der Oberfläche des Membranfiltermediums abfiltrierten Bestandteile in oder an der Einspülöffnung mit mindestens einer Drucksprüh- oder -spülvorrichtung abgelöst. Durch die Druckspülvorrichtung wird Filtrat oder Suspension möglichst in einem Winkel = 90° gegen die Oberfläche des Membranfilters gesprüht, wodurch die abfiltrierten Partikel von der Oberfläche des Membranfilters abgelöst werden. Dieser Effekt kann durch die Verwendung eines Impulsstrahls und/oder eines Ultraschallschwingers verstärkt werden. Das Rückspülen von der Filtratseite des Membranfilters kann hierbei sehr stark verringert werden.

Das Verfahren kann in vorteilhafter Weise zum Klassieren von Partikeln einer Suspension verwendet werden. Die Suspension durchströmt hierbei nacheinander mehrere hintereinander angeordnete Membranfilter. Der zuerst durchströmte Membranfilter hat die größten Poren, während die nachfolgenden Membranfilter mit abnehmender Porengröße einander nachgeordnet sind. Hierdurch sind die an dem ersten Membranfilter abfiltrierten Partikel die größten und die Partikelgröße der an den nachfolgenden Membranfiltern abfiltrierten Partikel wird entsprechend der Anzahl der vorgeordneten Membranfilter kleiner. Durch die Isolierung der an den einzelnen Membranfiltern abfiltrierten Partikel erreicht man somit eine Klassierung der Partikel nach Partikelgröße. Im Hinblick auf die Klassierung von Partikeln kann an Stelle einer Membran vorteilhafterweise auch ein Sieb- oder Filtermedium verwendet werden.

Bei der gemäß Anspruch 7 ausgebildeten Filtrationsvorrichtung ist das Membranfiltermedium in einem Druckbehälter angeordnet, weil Membranfilter in der Regel einen Porengrößenbereich von 0,1 bis 10 Mikrometer aufweisen. Zum Erreichen eines höheren Filterdurchsatzes ist es daher vorteilhaft, die Suspension mit höherem Druck als dem Kapillareintrittsdruck der Membran gegen diese zu pressen.

Die Einspülöffnung kann bei einer Ausführung der Vorrichtung beispielsweise so groß wie die Oberfläche des Membranfilters sein, wobei die Einspülöffnung wechselweise mit dem Suspensionsraum und dem Rückspülraum verbunden wird. Weil jedoch der Bereich der Einspülöffnung bis zum wechselweise betätigten Umschaltemchanismus (mit Klappe oder Ventilen ) einen Totraum darstellt, dessen Inhalt bei jedem Umschalten die Konzentration der abfiltrierten Partikel in dem Rückspülraum verringert und deren Konzentration in der Suspension erhöht, ist es günstiger, die Einspülöffnung kleiner als die Oberfläche des Membranfilters zu machen und die Einspülöffnung über die Oberfläche des Membranfilters zu bewegen. Durch Verbinden des Rückspülraums mit einer Druckregeleinrichtung läßt sich die Intensität des Rückspülvorgangs optimal (in oben bei der Zykluszeit des Rückspülvorgangs bereits beschriebener Weise) einregeln.

Durch eine zylinderförmige Ausbildung des Membranfilters erreicht man eine gleichmäßige Geschwindigkeit der Bewegung der Einspülöffnung über alle Bereiche der Oberfläche des Membranfilters.
Bei der Trennung von Gasgemischen oder Emulsionen können neben den kapillaren Eigenschaften einer Membran noch deren benetzende bzw. hydrophile und hydrophobe Eigenschaften ausgenutzt werden.

Vorteilhafte Ausgestaltungen der Erfindung sind Gegenstand der Unteransprüche.

Die Erfindung wird nachfolgend beispielsweise anhand der schematischen Zeichnung beschrieben. Es zeigen:
- Fig. 1: eine teilgeschnittene Seitenansicht eines Rückspülfilterapparates,
- Fig. 2: einen vergrößerten Ausschnitt II aus Fig. 1,
- Fig. 3: den Ausschnitt II bei Verwendung eines keramischen Membranfiltermediums,
- Fig. 4: den Schnitt IV-IV aus Fig. 1,
- Fig. 5: die Ansicht gemäß Fig. 4 mit einer modifizierten Absaugleiste,
- Fig. 6: einen zum Klassieren geeigneten Rückspülfilterapparat nach Fig. 1,
- Fig. 7: einen Rückspülfilterapparat mit einer zylindrischen Membranfläche, und
- Fig. 8: den Schnitt VIII-VIII aus Fig. 7.

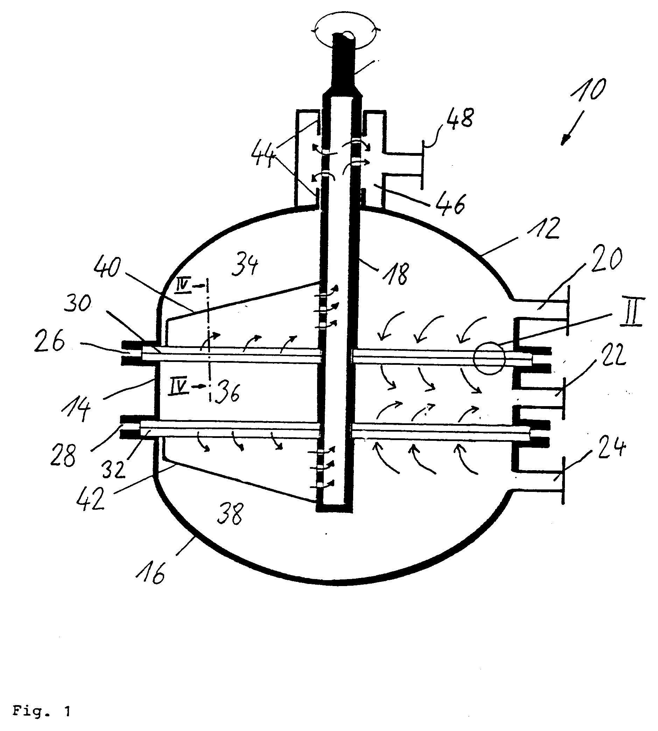

Fig. 1 zeigt einen Rückspülfilterapparat 10, der einen rotationssymmetrischen, längs der Rotationsachse dreigeteilten Druckbehälter 12,14,16 aufweist. Das obere Druckbehälterteil 12 hat eine axiale Öffnung, in der ein Absaugkanal 18 koaxial zur Rotationsachse drehbar gelagert ist. Jedes der drei Druckbehälterteile 12,14,16 hat eine Fluid-Zu- und/oder -Abführung 20,22,24. Die zwei Verbindungsstellen 26,28 der drei Druckbehälterteile 12, 14,16 sind jeweils als Flansch ausgebildet. In jedem Flansch 26,28 ist die Außenkante jeweils eines ringförmigen Membranfilters 30,32 gehalten, dessen Innenkante an dem Absaugkanal 18 anliegt. Ein Membranfilter besteht in nachfolgend noch näher dargestellter Weise aus profilierten Stützelementen und einem Membranfiltermedium.

Die drei Druckbehälterteile 12,14,16 umgeben drei Räume 34,36,38, die durch die beiden Membranfilter 30,32 voneinander getrennt sind. Der Absaugkanal 18 trägt zwei radial abstehende Absaugleisten 40,42, von denen eine in den oberen Raum 34 und die andere in den unteren Raum 38 hineinragt. Die Absaugleisten 40,42 sind mit dem hohlen Absaugkanal 18 verbunden. Die Öffnungen jeweils einer Absaugleiste 40,42 sind jeweils einer Oberfläche eines Membranfilters 30,32 zugewandt. Die zentrische Durchführung des Absaugkanals 18 in das obere Druckbehälterteil 12 ist mit zwei in Richtung der Rotationsachse versetzten Ringdichtungen 44 abgedichtet. Zwischen den Ringdichtungen 44 ist an der Außenseite des Druckbehälterteils 12 ein zylinderförmiger abgeschlossener Aufnahmeraum 46 ausgebildet, der mit dem Hohlraum des Absaugkanals 18 und über den Flansch 48 mit dem nicht dargestellten Rückspülraum verbunden ist.

Nachfolgend wird die Wirkungsweise des Rückspülfilterapparates 10 beispielsweise anhand der Filtration einer Suspension beschrieben. Mit dem Rückspülfilterapparat 10 können selbstverständlich auch Emulsionen, Gasgemische oder Aerosole getrennt werden.

Eine Suspension wird über die geflanschten Zuführungen 20 und 24 dem oberen und unteren Raum 34 und 38 zugeführt, die nachfolgend als oberer und unterer Suspensionsraum 34 bzw. 38 bezeichnet werden. Der Druck in den Suspensionsräumen 34,38 ist so groß, daß die Suspension die Membranfilter 30,32 durchströmt und in den mittleren Raum 36 (nachfolgend Filtratraum) zwischen den beiden Membranfiltern 30,32 gelangt, von wo er durch die geflanschte Fluidabführung 22 abgeleitet wird. Der Druck in den Suspensionsräumen 34,38 muß dabei größer sein als der Druck im Filtratraum 36. Der Absaugkanal 18 wird an seinem aus dem Rückspülfilterapparat 10 herausragenden Ende z.B. durch einen nicht dargestellten Elektromotor in eine Drehung versetzt. Hierbei streichen die Einspülöffnungen der Absaugleisten 40,42 in den beiden Suspensionsräumen 34,38 über die Oberfläche der beiden Membranfilter 30,32. In den Einspülöffnungen der Absaugleisten 40,42 herrscht ein geringerer Druck als im Filtratraum 36, wodurch in den Bereichen, in denen die Einspülöffnungen der Absaugleisten 40,42 an den Membranfiltern 30,32 anliegen, das Filtrat aus dem Filtratraum 36 durch die Membranfilter 30,32 in die zugehörige Absaugleiste 40,42 gespült wird. Hierbei werden die abfiltrierten Bestandteile, die sich auf den Membranfiltern 30,32 abgelagert haben in die Absaugleisten 40,42 gespült und über den Absaugkanal 18 und den Aufnahmeraum 46 von der Suspension getrennt. Die Oberflächen der Membranfilter 30,32 werden zyklisch gereinigt und eine Aufkonzentrierung oder Akkumulation der abfiltrierten Bestandteile in der Suspension wird vermieden.

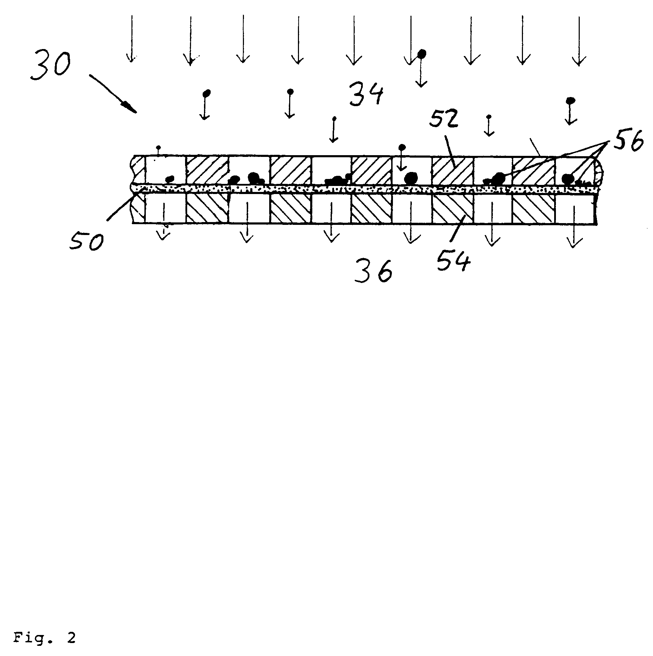

Fig. 2 zeigt einen vergrößerten Ausschnitt des Membranfilters 30 aus Fig. 1. Ein Membranfiltermedium 50 ist sowohl zum Suspensionsraum 34 als auch zum Filtratraum 36 von jeweils einem als Lochblech ausgebildeten profilierten Stützelement 52,54 abgestützt. Aufgrund des relativ zum Filtratraum 36 höheren Drucks im Suspensionsraum 34 durchströmt das Fluid beim Filtrationsvorgang das Membranfiltermedium 50 in Richtung auf den Filtratraum 36. Die Porengröße des Membranfiltermediums 50 ist so gewählt, daß die abzuscheidenden Bestandteile 56 der Suspension an der dem Suspensionsraum 34 zugewandten Oberfläche des Membranfiltermediums 50 abgeschieden werden. Die senkrechten Pfeile charakterisieren die Strömungsrichtung des Fluids.

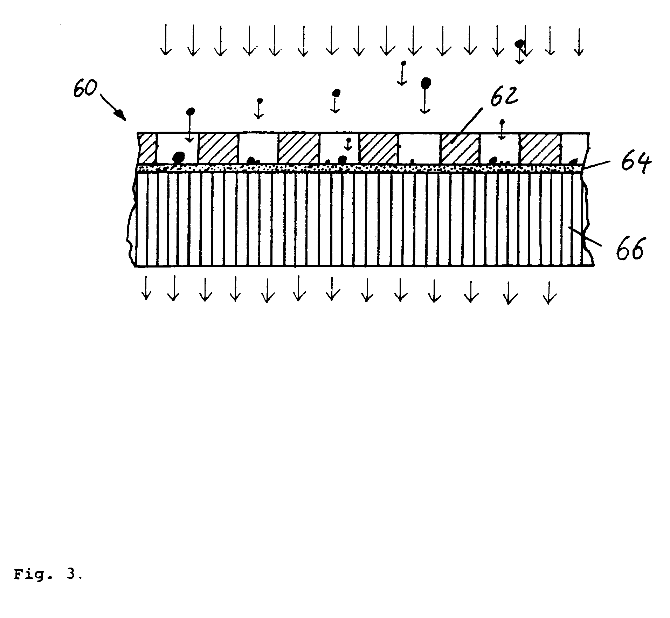

Fig. 3 zeigt einen Ausschnitt aus einem Membranfilter 60, der beispielsweise anstelle der Membranfilter 30 und 32 in dem Rückspülfilterapparat 10 aus Fig. 1 eingesetzt werden kann. Das Membranfiltermedium 64 ist hier auf seiner dem Suspensionsraum zugewandten Suspensionsseite durch ein Lochblech 62 und auf seiner dem Filtratraum zugewandten Filtratseite durch eine Keramikplatte 66 abgestützt. Dieses Membranfiltermedium 64 ist als Polymer-, Metall- oder Keramikmembran ausgebildet. Bei der Verwendung einer porösen Keramikplatte 66 mit integrieter Keramikmembran kann auf das Membranfiltermedium 64 wahlweise verzichtet werden.

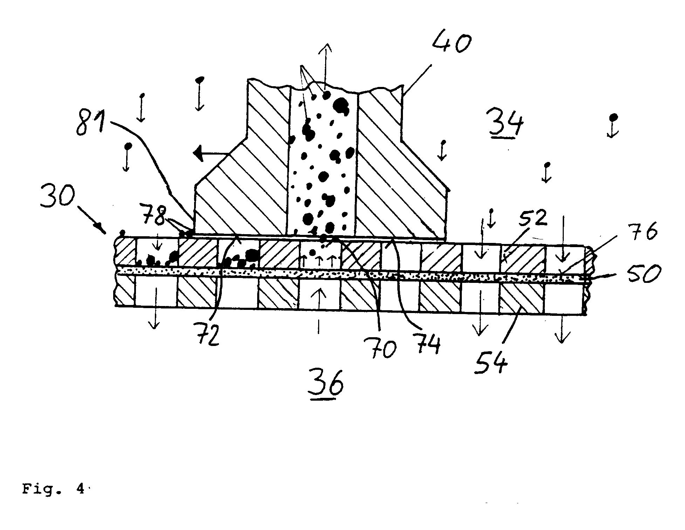

In Fig. 4 ist der Membranfilter 30 mit der Absaugleiste 40 aus Fig. 1 dargestellt, wobei der Membranfilter 30 entsprechend Fig. 2 ausgebildet ist.

Die Absaugleiste 40 bewegt sich im Betrieb von rechts nach links, wobei der rechte Bereich des Membranfilters 30 bereits gereinigt ist. Der mittlere Bereich des Membranfilters 30 befindet sich grade in der Reinigungsphase, während der linke Bereich des Membranfilters 30 noch zu reinigen ist.
Die Absaugleiste 40 hat eine dem Membranfilter 30 zugewandte Einspülöffnung 70, die beidseitig von den Anlageflächen 72,74 umgeben ist. Diese liegen im wesentlichen an dem Membranfilter 30 an. Die Breite der Anlageflächen 72,74 ist so bemessen, daß immer mindestens ein Steg des Lochblechs 52 abgedeckt wird. Hierdurch wird die Einspülöffnung 70 gut gegen den Suspensionsraum 34 abgedichtet und Fehlströmungen aus dem Suspensionsraum 34 in die Einspülöffnung 70 werden vermieden. In der Einspülöffnung 70 herrscht ein geringerer Druck als im Filtratraum 36. Hierdurch strömt Filtrat aus dem Filtratraum 36 durch das Membranfiltermedium 50 in die Einspülöffnung 70 und reißt abfiltrierte Bestandteile von der Oberfläche 76 des Membranfiltermediums 50 fort. Beim Verschieben der Absaugleiste 40 werden auf dem Lochblech 52 befindliche Bestandteile 78 von der in Bewegungsrichtung vorne liegenden unteren Kante 81 der Absaugleiste 40 in die Aussparungen zwischen den Stegen des Lochblechs geschoben. Der Rückspülzyklus ist zeitlich relativ zum Filtrationszyklus in bestimmten Bereichen einzustellen, wie bereits beschrieben wurde.

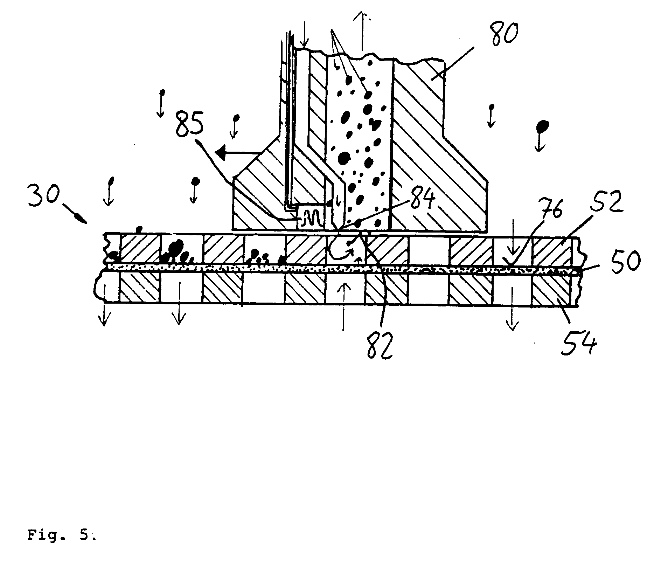

Fig. 5 zeigt die gleiche Ansicht wie Fig. 4 mit einer modifizierten Absaugleiste 80. Die Arbeitsweise der Absaugleiste 80 ist gleich der in Fig. 4 beschriebenen Arbeitsweise der Absaugleiste 40. Um die abfiltrierten Bestandteile auf der Oberfläche 76 des Membranfiltermediums 50 leicht ablösen zu können, hat diese Absaugleiste 80 in ihrer Einspülöffnung 82 eine Strahldüse 84, durch die mit hohem Druck ein Fluid auf die Oberfläche 76 des Membranfiltermediums 50 gerichtet wird, worauf die darauf befindlichen Feststoffe aufgewirbelt werden und leicht abgesaugt werden können. Als Fluid kann je nach Bedarf Filtrat, Suspension, Druckluft oder eine andere Waschflüssigkeit verwendet werden. Durch Impulsstrahlung kann man die Wirkung der Strahldüse 84 weiter verbessern. Bei dieser Art der Reinigung kann die Rückspülung durch die Membran stark verringert werden. Das Ablösen der abfiltrierten Partikel kann durch den Einsatz von Ultraschallschwingern 85 anstelle oder zusätzlich zur Strahldüse 84 verbessert werden.

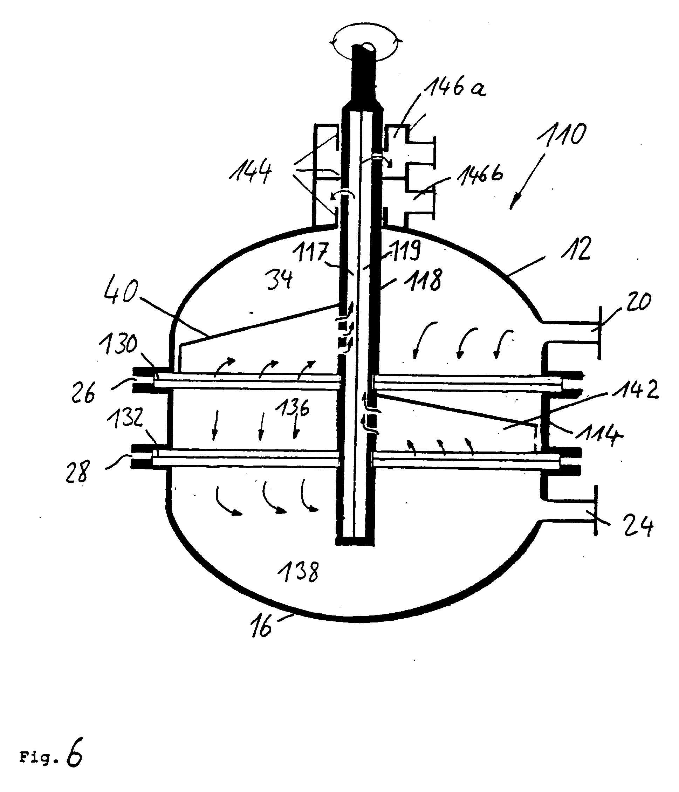

Fig. 6 zeigt einen Rückspülfilterapparat 110, der im wesentlichen ähnlich dem Rückspülfilterapparat 10 aus Fig. 1 ausgebildet ist, wobei identische Funktionselemente mit identischen Bezugszeichen versehen sind. Ähnliche Funktionselemente tragen gegenüber den Funktionselementen aus Fig. 1 um 100 erhöhte Bezugszeichen.

Der Rückspülfilterapparat 110 ist zum Klassieren der an den Membranfiltern 130,132 abfiltrierten Partikel in zwei Klassen ausgebildet. Er verfügt wie der Rückspülfilterapparat 10 über drei getrennte Druckbehälterteile 12,114,16, wobei der mittlere zylindrische Druckbehälterteil 114 keine Fluid-Zu- oder -Abführung aufweist (oder eine vorhandene Fluid-Zu- oder -Abführung verschlossen ist). Der obere Membranfilter 130 hat ein Membranfiltermedium mit einer grobporigen Membran, während der untere Membranfilter 132 ein Membranfiltermedium mit einer feinporigen Membran aufweist. Der Absaugkanal 118 hat in seinem hohlen Innenraum zwei voneinander getrennte Kanäle 117,119, von denen der eine Kanal 117 mit einem unteren Aufnahmeraum 146b und der oberen Absaugleiste 40 verbunden ist, die die abfiltrierten Partikel des oberen Membranfilters 130 absaugt. Der andere Kanal 119 ist mit dem oberen Aufnahmeraum 146a und der Absaugleiste 142 verbunden. Die Suspension gelangt über die Fluidzuführung 20 in den Suspensionsraum 34, durchströmt den oberen Membranfilter 130 mit dem grobporigen Membranfiltermedium und gelangt in den Zwischenraum 136. Von dort strömt es weiter durch den unteren Membranfilter 132 mit dem feinporigen Membranfiltermedium und gelangt in den Filtratraum 138, von wo aus es über die Fluidabführung 24 abgeleitet wird. Der Druck im Suspensionsraum 34 muß hierfür größer sein als im Filtratraum 138.

In dem einen Kanal 117, der mit dem unteren Aufnahmeraum 146b und mit der oberen Absaugleiste 40 verbunden ist, muß, falls nicht mit Druckspülung (Fig. 5) gearbeitet wird, ein niedrigerer Druck als im Zwischenraum 136 herrschen. Dann werden die am Membranfilter 130 abfiltrierten Partikel über den einen Kanal 117 und den unteren Aufnahmeraum 146b in den ersten Rückspülraum gespült. Da das im oberen Membranfilter 130 befindliche Membranfiltermedium grobporig ist, sind auch die in den ersten Rückspülraum gespülten Partikel gröber als die am unteren Membranfilter 132 abfiltrierten feineren Partikel, die über den anderen Kanal 119 und über den oberen Aufnahmeraum 146a in einen zweiten Rückspülraum geleitet werden. Auf diese Weise erhält man zwei nach Partikelgröße klassierte Partikelgruppen.

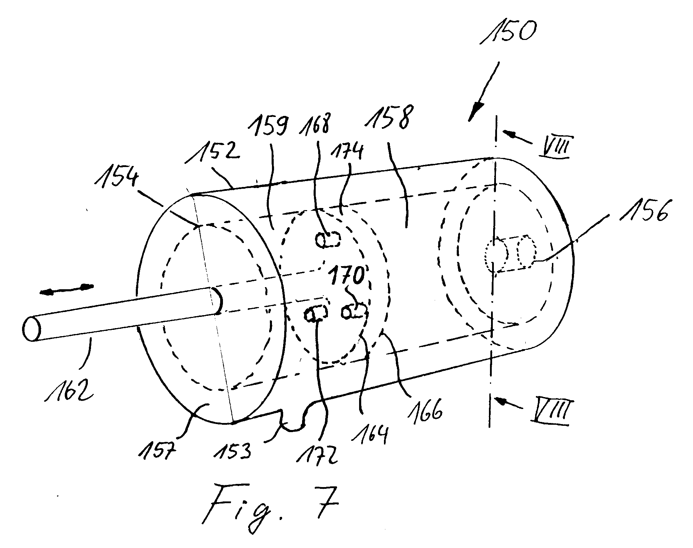

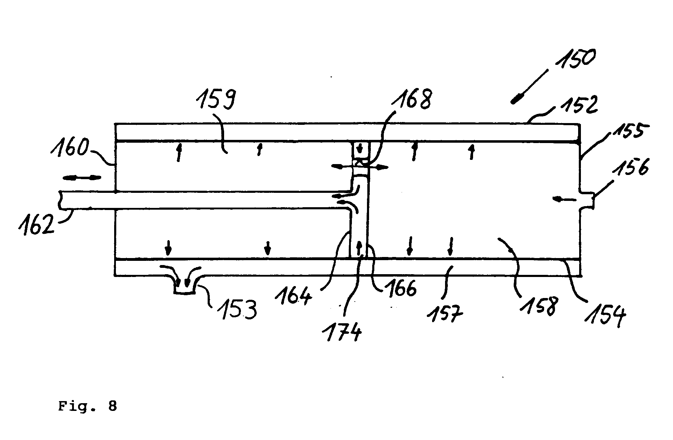

Fig. 7 und 8 zeigen einen zylinderförmigen Rückspülfilterapparat 150 mit einem zylindrischen Druckbehälter 152. An der Unterseite des Druckbehälters 152 befindet sich eine Fluidabführung 153. In dem zylindrischen Druckbehälter 153 ist koaxial zur Zylinderachse ein zylinderförmiger Membranfilter 154 mit einem geringeren Durchmesser als der des Druckbehälters 152 angeordnet. Auf der rückseitigen Stirnfläche 155 befindet sich eine zentrisch angeordnete Fluidzuführung 156, die mit dem durch den Membranfilter 154 gebildeten Zylinderinnenraum 158,159 verbunden ist. Der Raum zwischen der Außenmantelfläche des Membranfilters 154 und dem Druckbehälter 152 bildet den Filtratraum 157. Die vordere Stirnfläche 160 hat ein zentrisches Loch, durch das ein Rohr 162 parallel zur Zylinderachse verschiebbar ist. Die Durchführung des Rohres 162 durch die vordere Stirnfläche 160 ist abgedichtet. An dem in den Druckbehälter 152 hineinragenden Ende des Rohres 162 ist eine ringförmige Platte 164 senkrecht zum Rohr 162 angeordnet. Diese kann einstückig mit dem Rohr 162 verbunden sein. Die Platte 164 liegt mit ihrer radial nach außen weisenden Außenkante im wesentlichen an der Innenfläche des zylinderförmigen Membranfilters 154 an. Parallel zu der Platte 164 ist eine Abschlußplatte 166 über mehrere rohrförmige Verbindungen 168,170,172 an der Platte 164 befestigt. Durch die Rohrverbindungen 168,170 und 172 kann das zugeführte Fluid auf beide Seiten 158,159 der Platten 164,166 fließen.

Nachfolgend wird die Wirkungsweise dieses Rückspülfilterapparates 150 anhand der Filtration einer Suspension beschrieben, was die Verwendung für Emulsionen, Gasgemische und Aerosole nicht ausschließen soll.

Die Suspension wird durch die Fluidzuführung 156 in den ais Suspensionsraum 158,159 bezeichneten Raum innerhalb des Membranfilters 154 gepumpt. Im Suspensionsraum 158,159 herrscht ein Überdruck gegenüber dem Filtratraum 157. Daher strömt die Suspension durch den zylinderförmigen Membranfilter 154, wobei sich die festen Partikel an der Zylinderinnenwand des Membranfilters anlagern. Die zwischen den Platten 164 und 166 gebildete Einspülöffnung 174 wird in Richtung der Zylinderachse an der Zylinderinnenfläche des zylinderförmigen Membranfilters 154 entlangbewegt. Die ringförmige Einspülöffnung 174 ist über das Rohr 162 mit einem nicht dargestellten Rückspülraum verbunden, in dem ein geringerer Druck als im Filtratraum 157 herrscht. Hierdruch strömt etwas Filtrat durch den Membranfilter 154 in die Einspülöffnung 174 und reißt die dort angelagerten Partikel von der Zylinderinnenwand des zylinderförmigen Membranfilters 154 fort. Vorteilhafterweise wird der Rückspülvorgang immer nur bei einer Bewegung der ringförmigen Einspülöffnung 174 in eine Richtung durchgeführt, damit der Zyklus von Filtrationsvorgang und Rückspülvorgang an jeder Stelle des Membranfilters 154 konstant bleibt.

## Patentansprüche

1. Verfahren zum Entfernen abzuscheidender Bestandteile aus einem Fluid, bei dem das Fluid in einem Filtrationsvorgang ein Filtermedium aufgrund einer Druckdifferenz im wesentlichen senkrecht durchströmt und bei dem die abfiltrierten Bestandteile in einem Rückspülvorgang von der Oberfläche des Filtermediums entfernt werden, wobei die abfiltrierten Bestandteile im Rückspülvorgang in einen von dem zu filtrierenden Fluid abgetrennten Rückspülraum gespült werden,
dadurch **gekennzeichnet**,
daß das Fluid derart durch das als Membranfilter ausgebildete Filtermedium geleitet wird, daß ein Querstrom entlang der Oberfläche der Membran im wesentlichen vermieden wird.

2. Verfahren nach Anspruch 1,
dadurch **gekennzeichnet**,
daß die abfiltrierten Bestandteile (56) in den Rückspülraum durch eine dem Membranfiltermedium (50) zugewandte Einspülöffnung (70) gespült werden, die kleiner als die Fläche des Membranfiltermediums (50) ist und daß der Filtrationsvorgang und der Rückspülvorgang gleichzeitig an unterschiedlichen Orten des Membranfiltermediums durchgeführt werden.

3. Verfahren nach Anspruch 2,
dadurch **gekennzeichnet**,
daß die Einspülöffnung (70) periodisch über die gesamte Oberfläche des Membranfiltermediums (50) bewegt wird.

4. Verfahren nach Anspruch 2 oder 3,
dadurch **gekennzeichnet**,
daß die an der Oberfläche des Membramfiltermediums (50) abfiltrierten Bestandteile (56) in oder an der Einspülöffnung (82) mit mindestens einer Drucksprüh- oder -spülvorrichtung (84) abgelöst werden.

5. Verfahren nach einem der Ansprüche 2 bis 4,
dadurch **gekennzeichnet**,
daß das Ablösen der abfiltrierten Bestandteile (56) durch den Einsatz von mindestens einem im Bereich der Einspülöffnung (82) angeordneten Ultraschallschwinger (85) unterstützt wird.

6. Verfahren nach einem der vorhergehenden Ansprüche,
dadurch **gekennzeichnet**,
daß ein Fluid mehrere mit abnehmender Porengröße einander nachgeordnete Membranfilter (130, 132) durchströmt, wobei die an jedem Membranfilter abfiltrierten Bestandteile isoliert voneinander abgeführt und damit klassiert werden.

7. Filtrationsvorrichtung mit einem zur Aufnahme zumindest eines Filtermediums (50) ausgebildeten Druckbehälter (12, 14, 16; 12, 114, 16; 152) mit beiderseits des Filtermediums angeordneten und durch das Filtermedium voneinander getrennten Behälterräumen (34, 36, 38; 34, 136, 138; 158, 159), die jeweils mindestens eine eigene Fluidzu- und/oder -abführung (20, 22, 24; 153, 156) aufweisen, sowie einem von den Behälterräumen isolierten Rückspülraum, der zumindest eine dem Filtermedium zugewandte und wenigstens einem Teil der zuströmseitigen Oberfläche des Filtermediums unmittelbar benachbarte Einspülöffnung (70) umfaßt, wobei das Filtermedium im wesentlichen senkrecht zur Strömungsrichtung des Fluids angeordnet ist,
dadurch **gekennzeichnet**,
daß das Filtermedium als Membranfilter (30, 32; 130, 132; 154) ausgebildet ist.

8. Vorrichtung nach Anspruch 7,
dadurch **gekennzeichnet**,
daß mit dem Rückspülraum eine Druckregeleinrichtung verbunden ist.

9. Vorrichtung nach Anspruch 7 oder 8,
dadurch **gekennzeichnet**,
daß der Druckbehälter (10) als Druckkessel mit einem senkrecht zur Längsachse kreisrunden Querschnitt ausgebildet ist,
daß in dem Druckkessel (10) koaxial zur Kesselachse mindestens ein Absaugkanal (18) drehbar angeordnet ist,
daß sich mindestens ein ringförmiger Membranfilter (30, 32) radial zwischem dem Absaugkanal (18) und der Kesselwand erstreckt,
daß mit dem Absaugkanal (18) mindestens eine radial verlaufende Absaugleiste (40, 42) mit wenigstens einer Einspüloffnung (70) verbunden ist, die an jeweils einem Membranfilter (30, 32) anliegt.

10. Vorrichtung nach Anspruch 9,
dadurch **gekennzeichnet**,
daß mehrere Membranfilter (30, 32) mit gemeinsamer Achse hintereinander in dem Druckkessel (12, 14, 16) angeordnet sind.

11. Vorrichtung nach Anspruch 7 oder 8,
dadurch **gekennzeichnet**,
daß der Membranfilter (154) zylinderförmig ist und daß die Einspülöffnung (174) ringförmig ausgebildet und der Zylinderinnenwand des Membranfilters (154) zugewandt ist, wobei die Einspülöffnung (174) die gesamte Oberfläche des Membranfilters (154) durch eine Bewegung in axialer Richtung überstreicht.

12. Vorrichtung nach einem der Ansprüche 7 bis 11,
dadurch **gekennzeichnet**,
daß ein Membranfilter (30) ein Membranfiltermedium (50) aufweist, das an mindestens einem profilierten Stützelement (52, 54) anliegt.

## Claims

1. Method for the removal of components to be separated from a fluid, in which the fluid flows substantially vertically through a filter medium during a filtration process as a result of a pressure difference and in which the filtered components are removed in a back-flushing process from the surface of the filter medium, the filtered off components being flushed during the back-flushing process into a back-flushing chamber separate from the fluid to be filtered, characterized in that the fluid is passed through the filter medium constructed as a membrane filter in such a way that a transverse flow along the surface of the membrane is substantially avoided.

2. Method according to claim 1, characterized in that the filtered components (56) are flushed into the back-flushing chamber through a jetting opening (70) facing the membrane filter medium (50) and which is smaller than the surface of the membrane filter medium (50) and that the filtration process and the back-flushing process are performed simultaneously at different locations of the membrane filter medium.

3. Method according to claim 2, characterized in that the jetting opening (70) is periodically moved over the entire surface of the membrane filter medium (50).

4. Method according to claim 2 or 3, characterized in that the components (56) filtered on the surface of the membrane filter medium (50) are detached in or on the jetting opening (82) with at least one jetting or pressure spraying device (84).

5. Method according to one of the claims 2 to 4, characterized in that the detachment of the filtered components (56) is assisted by the use of at least one ultrasonic generator (85) positioned in the vicinity of the jetting opening (82).

6. Method according to one of the preceding claims, characterized in that a fluid flows through several membrane filters (130, 132) successively arranged with decreasing pore size, the components filtered at each membrane filter being removed in isolated manner from one another and are therefore classified.

7. Filtration device with a pressure container (12, 14, 16; 12, 114, 16; 152) constructed for receiving at least one filter medium (50) and with container chambers (34, 36, 38; 34, 136, 138; 158, 159) separated from one another by the filter medium and positioned on either side of the latter and which in each case have at least one independent fluid supply and/or discharge (20, 22 24; 153, 156), as well as a back-flushing chamber isolated from the container chambers and which has at least one jetting opening (70) facing the filter medium closely adjacent to at least part of the inflow-side surface of the filter medium, the filter medium being positioned substantially perpendicular to the fluid flow direction, characterized in that the filter medium is constructed as a membrane filter (30, 32; 130, 132; 154).

8. Device according to claim 7, characterized in that a pressure regulating device is connected to the back-flushing chamber.

9. Device according to claim 7 or 8, characterized in that the pressure container (10) is constructed as a pressure vessel with a circular cross-section perpendicular to the longitudinal axis, that in the pressure vessel (10) and coaxial to its axis is arranged in rotary manner at least one suction channel (18), that at least one annular membrane filter (30, 32) extends radially between the suction channel (18) and the vessel wall and that to the suction channel (18) is connected at least one radially directed suction strip (40, 42) having at least one jetting opening (70) and which engages on in each case one membrane filter (30, 32).

10. Device according to claim 9, characterized in that several membrane filters (30, 32) with a common axis are successively arranged in the pressure vessel (12, 14, 16).

11. Device according to claim 7 or 8, characterized in that the membrane filter (154) is cylindrical and that the jetting opening (174) is annular and faces the cylinder inner wall of the membrane filter (154), the jetting opening (174) passing over the entire surface of the membrane filter (154) through an axial movement.

12. Device according to one of the claims 7 to 11, characterized in that a membrane filter (30) has a membrane filter medium (50), which engages on at least one profiled support element (52, 54).

## Revendications

1. Procédé pour enlever des composants à séparer d'un fluide, dans lequel le fluide au cours d'un processus de filtration traverse un milieu de filtration sous l'effet d'une différence de pression essentiellement verticale et dans lequel les composants retenus par filtration sont éliminés de la surface du milieu de filtration au cours d'un processus de rinçage, dans lequel les composants retenus par filtration sont entraînés lors du processus de rinçage dans une chambre de rinçage séparée du fluide à filtrer, caractérisé en ce qu'on fait passer le fluide à travers le milieu de filtration constitué par une membrane filtrante de telle manière qu'on évite essentiellement un courant transversal le long de la surface de la membrane.

2. Procédé selon la revendication 1, caractérisé en ce que les composants (56) retenus par filtration sont entraînés dans la chambre de rinçage par un orifice de rinçage (70) tourné vers le milieu de membrane filtrante (50), qui est plus petit que la surface du milieu de membrane filtrante (50) et qu'on réalise simultanément le processus de filtration et de rinçage en différents endroits du milieu de membrane filtrante.

3. Procédé selon la revendication 2, caractérisé en ce que l'orifice de rinçage (70) est déplacé périodiquement sur toute la surface du milieu de la membrane filtrante (50).

4. Procédé selon la revendication 2 ou 3, caractérisé en ce que les composants (56) retenus par filtration à la surface du milieu de la membrane filtrante (50) sont détachés dans ou au niveau de l'orifice de rinçage (82) avec au moins un dispositif de rinçage ou de pulvérisation sous pression (84).

5. Procédé selon l'une des revendications 2 à 4, caractérisé en ce que le décollement des composants retenus par filtration (56) est facilité grâce à l'utilisation d'au moins une sonotrode d'ultrasons (85) disposée dans la zone de l'orifice de rinçage (82).

6. Procédé selon l'une des revendications précédentes, caractérisé en ce qu'un fluide traverse plusieurs membranes filtrantes (130, 132) à taille de pores décroissantes disposées l'une derrière l'autre, les composants retenus sur chaque membrane filtrante pouvant être prélevés séparément et ainsi classifiés.

7. Dispositif de filtration comprenant une cuve sous pression (12, 14, 16 ; 12, 14, 16 ; 152) réalisée de façon à recevoir au moins un milieu de filtration (50) avec de chaque côté du milieu de filtration des chambres de cuve (34, 36, 38 ; 34, 136 ; 138 ; 158, 159) séparées l'une de l'autre par le milieu de filtration et présentent chaque fois une arrivée et/ou une sortie propre de fluide (20, 22, 29 ; 153, 156), ainsi qu'une chambre de rinçage isolée des chambres de cuve, qui comprend au moins un orifice de rinçage (70) tourné vers le milieu de filtration et à proximité immédiate d'au moins une partie de la surface à balayer du milieu de filtration disposé essentiellement perpendiculairement au sens d'écoulement du fluide caractérisé en ce que le milieu de filtration est constitué d'une membrane filtrante (30, 32 ; 130 ; 132 ; 154).

8. Dispositif selon la revendication 7, caractérisé en ce qu'un dispositif de régulation de pression est relié à la chambre de rinçage.

9. Dispositif selon la revendication 7 ou 8, caractérisé en ce que la cuve sous pression (10) est constituée en réacteur sous pression avec une section circulaire perpendiculaire à l'axe longitudinal, que dans le réacteur sous pression (10) au moins un canal d'aspiration (18) est placé en rotation coaxialement par rapport à l'axe du réacteur, qu'au moins une membrane filtrante annulaire (30, 32) s'étend radialement entre le canal d'aspiration (18) et la paroi du réacteur, qu'au moins une plaque d'aspiration (40, 42) comprenant au moins un orifice de rinçage (70), s'étendant radialement est reliée au canal d'aspiration (18), et qui repose sur chaque membrane filtrante (30, 32).

10. Dispositif selon la revendication 9, caractérisé en ce que plusieurs membranes filtrantes (30, 32) sont disposées l'une derrière l'autre dans le réacteur sous pression (12, 14, 16) suivant un axe commun.

11. Dispositif selon la revendication 7 ou 8, caractérisé en ce que la membrane filtrante (154) est cylindrique et que l'orifice de rinçage (174) est de forme annulaire et est tourné vers la paroi interne cylindrique de la membrane filtrante (154), l'orifice de rinçage (174) balaye toute la surface de la membrane filtrante (154) par un déplacement en sens axial.

12. Dispositif selon l'une des revendications 7 à 11, caractérisé en ce qu'une membrane filtrante (30) présente un milieu de membrane filtrante (50) qui repose au moins sur un élément d'appui profilé (52, 54).
